# EUROPÄISCHE PATENTSCHRIFT

(11) **EP 1 189 732 B1**
(45) Veröffentlichungstag und Bekanntmachung des Hinweises auf die Patenterteilung: **07.05.2003**
(21) Anmeldenummer: 00940320.5
(22) Anmeldetag: 06.06.2000
(51) Int. Cl.: B25J 9/16

(54) **VERFAHREN UND VORRICHTUNG ZUM KALIBRIEREN VON ROBOTERMESSSTATIONEN, MANIPULATOREN UND MITGEFÜHRTEN OPTISCHEN MESSEINRICHTUNGEN**
METHOD AND DEVICE FOR CALIBRATING ROBOT MEASURING STATIONS, MANIPULATORS AND ASSOCIATED OPTICAL MEASURING DEVICES
PROCEDE ET DISPOSITIF D'ETALONNAGE DE STATIONS DE MESURES ROBOTISEES, DE MANIPULATEURS, ET DE SYSTEMES DE MESURE OPTIQUES ASSOCIES

(30) Priorität: 26.06.1999 DE 29911187 U; 08.07.1999 DE 19931676; 24.02.2000 DE 20003381 U
(43) Veröffentlichungstag der Anmeldung: 27.03.2002
(73) Patentinhaber: KUKA Schweissanlagen GmbH, 86165 Augsburg (DE)
(72) Erfinder: ROOS, Eberhard, D-86316 Friedberg (DE)
(74) Vertreter: Ernicke, Hans-Dieter, Dipl.-Ing.
(86) Internationale Anmeldenummer: EP0005175
(87) Internationale Veröffentlichungsnummer: WO01000370

(56) Entgegenhaltungen:
- EP-A- 0 763 406
- US-A- 5 041 907
- US-A- 5 297 238
- LOOSE D C ET AL: "PPA-A PRECISE, DATA DRIVEN COMPONENT TOOL" IEEE ROBOTICS & AUTOMATION MAGAZINE,US,IEEE SERVICE CENTER, PISCATAWAY, NJ, Bd. 1, Nr. 1, 1. März 1994 (1994-03-01), Seiten 6-12, XP000457891 ISSN: 1070-9932
- TSAI R Y ET AL: "A NEW TECHNIQUE FOR FULLY AUTONOMOUS AND EFFICIENT 3D ROBOTICS HAND/EYE CALIBRATION" IEEE TRANSACTIONS ON ROBOTICS AND AUTOMATION,US,IEEE INC, NEW YORK, Bd. 5, Nr. 3, 1. Juni 1989 (1989-06-01), Seiten 345-358, XP000028733 ISSN: 1042-296X

## Beschreibung

Die Erfindung betrifft ein Verfahren und eine Vorrichtung zum Kalibrieren von Robotermessstationen, Messrobotern und mitgeführten optischen Messeinrichtungen mit den Merkmalen im Oberbegriff des Verfahrens- und Vorrichtungshauptanspruches.

Aus der Praxis sind Roboter-Messstationen für Werkstücke, insbesondere für Fahrzeugrohkarosserien bekannt, in denen ein oder mehrere mehrachsige Messroboter mit optischen Messeinrichtungen, z.B. mit 3-D-Sensoren, ausgerüstet sind. Bei den bekannten Messstationen und deren Messeinrichtungen besteht ein erhebliches Kalibrierproblem. Üblicherweise wird nur der Messroboter mit seinen Achsen kalibriert, indem der mit einem geeigneten Kalibrierwerkzeug, das zu diesem Zweck gegen die optische Messeinrichtung getauscht wird, geeignete Prüfkörper, z. B. Kugeln mit bekannter Position anfährt. Auch die Kalibrierung der ein- oder mehrachsigen optischen Messeinrichtung ist schwierig. Sie besitzt einen definierten Arbeitspunkt, der im Roboterprogramm als Tool-Center-Point (abgekürzt TCP) oder als Tool-Coordinate-System (abgekürzt TCS) bezeichnet wird. Solche ein- oder mehrachsigen optischen Messeinrichtungen können sogenannten 3-D-Sensoren, Messkameras oder dergleichen sein. Bei solchen optischen Messwerkzeugen ist der Arbeitspunkt unsichtbar und kann nicht ohne weiteres messtechnisch ermittelt werden. Darüber hinaus unterscheiden sich alle optischen Sensoren insofern voneinander, als sie alle ein unterschiedliches Sensor-Koordinatensystem haben. Dies ist zum einen systembedingt und zum anderen auch herstellungsbedingt. Selbst bei gleichen Sensortypen kann das Sensor-Koordinatensystem variieren. Hierdurch sind die Messsensoren nicht untereinander ohne weiteres austauschbar. Wenn im Falle eines Sensor-Defektes ein Austausch erforderlich ist, müssen alle Arbeitspunkte im Roboterprogramm überprüft und ggf. einzeln in einem Kalibriervorgang korrigiert werden. Hierunter leidet die technische Verfügbarkeit der Messstation. Auch die Prozesssicherheit ist nicht mehr gewährleistet.

Vor dem Messbetrieb wird der Messroboter einmalig in der vorbeschriebenen Weise kalibriert, wobei seine Achsenfehler ermittelt und in den Maschinendaten bzw. der Steuerung kompensiert werden. Darüber hinaus erfolgt eine einmalige Ausrichtung in Bezug auf das Werkstück z.B. durch Vermessung mit einem übergeordneten Messsystem. Bei der Vermessung geht man davon aus, dass der einmalige Einrichtvorgang genügt und der Messroboter dann eine hinreichende Messgenauigkeit in seinem gesamten Arbeitsraum hat. Die erzielbare Messpräzision und die absolute Genauigkeit ist in der Praxis jedoch beschränkt und unterliegt Fehlereinflüssen, die sich während des Betriebes über längere Zeiträume einstellen und z. B. auf wärmeabhängige Veränderungen der Robotergeometrie oder auch Verschleiß zurückzuführen sind. Die erzielbare Messpräzision kann durch eine einmalige Justierung oder Kalibrierung nicht gewährleistet werden.

Aus der US-A-5,297,238 ist es bekannt, einen Bearbeitungsroboter mit Bearbeitungswerkzeugen, z.B. Vakuumgreifern, Schweißbrenner und dergleichen zu kalibrieren. Dieser Kalibriervorgang wird mit Hilfe eines temporär verwendeten Kamerasystems durchgeführt, welches vom Roboter mitgeführt wird. Hierbei wird zunächst das Kamerasystem durch optische Vermessung einer vorgegebenen Oberfläche mit mehreren definierten Punkten kalibriert, wobei das Kamerasystem an der Hand des noch nicht kalibrierten Roboters angeflanscht ist und in eine in etwa orthogonale Position zu dieser Oberfläche gebracht wird. Wegen der Roboterungenauigkeit wird die Vermessung mehrmals durchgeführt und statistisch ausgewertet. Anschließend wird mit dem gleichen Kamerasystem der Roboterbezug zur Zellenumgebung kalibriert. Im dritten Schritt wird der Roboter in der Arbeitsumgebung punktweise lagekalibriert, indem mit dem Kamerasystem eine Vielzahl bekannter Punkte angefahren, vermessen und etwaige Positionsabweichungen des Roboters mit punktbezogenen kartesischen Offsets korrigiert werden. Anschließend werden mit Hilfe des Kamerasystems auch die für den späteren Arbeitseinsatz des Roboters benutzten Werkzeuge kalibriert.

Andere Verfahren zur Kalibrierung von Bearbeitungsrobotern mit Bearbeitungswerkzeugen sind aus den Literaturstellen Loose D. C. et al. "PPA-A Precise, Data Driven Component Tool", IEEE Robotics & Automation Magacine, US, IEEE Service Center, Piscataway, NJ, Band 1, Nummer 1, 1. März 1994, Seiten 6 bis 12 und TSAI R. Y. et al.: "A New Technique for Fully Autonomous and Efficient 3D Robotics Hand/Eye Calibration", IEEE Transactions on Robotics and Automation, US, IEEE Inc., New York, Band 5, Nummer 3, 1. Juni 1989, Seiten 345 bis 358 bekannt. Zur Kalibrierung werden externe Kamerasysteme und eine an der Roboterhand neben dem Werkzeug mitgeführte Kamera verwendet, welche zum Führen des Werkzeugs dient.

Es ist daher Aufgabe der vorliegenden Erfindung, ein besseres Verfahren nebst Vorrichtung zum Kalibrieren aufzuzeigen.

Die Erfindung löst diese Aufgabe mit den Merkmalen in den Verfahrens- und Vorrichtungshauptansprüchen 1 und 9. Die Kalibrierung in der Messkaskade mit mindestens drei Kalibrierschritten hat den Vorteil, dass zum einen die Kalibrier- und Messgenauigkeit wesentlich erhöht wird. In den einzelnen Kalibrierschritten ist eine Genauigkeit von ca. 0,05 mm erreichbar, woraus sich eine Gesamtgenauigkeit von ca. 0,1 mm für das gesamte aus Messroboter und optischer Messeinrichtung bestehende Messsystem ergibt. Bei der mehrstufigen Kalibrierung können eventuelle Fehler sicher erkannt und gezielt bestimmten Fehlerursachen zugeordnet werden. Dies erlaubt eine gezielte Fehlerbehebung und die vorerwähnte Steigerung der Genauigkeit.

Mit der Messkaskade ist auch eine gezielte Eingrenzung der Fehlerursachen möglich. Hierfür ist es sinnvoll, wenn der erste Kalibrierschritt die optische Messeinrichtung mit ihrem Arbeitspunkt betrifft. Bei dieser Kalibrierung werden andere Fehlerursachen, die vom Hessroboter bzw. von der Messstation stammen, ausgeschaltet. Im zweiten Schritt wird der Messroboter mit seinen Achsen kalibriert. Mit dem vorher bereits kalibrierten optischen Messwerkzeug wird die Achskalibrierung des Roboters durchgeführt. Fehlereinflüsse vom optischen Messwerkzeug sind dabei ausgeschlossen. Auch die Messstation hat keinen Einfluss. Der dritte Kalibrierschritt betrifft die Stations- oder Zellengeometrieprüfung und die Zuordnung des Messroboters zum Werkstück bzw. zur Werkstückaufnahme. Die ersten beiden. Kalibrierschritte erlauben es, diese Zellengeometrieprüfung mit dem Messroboter und seiner optischen Messeinrichtung durchzuführen. Auf eine zusätzliche und aufwendige externe Vermessung kann verzichtet werden. Die vorherigen zwei Kalibrierschritte bieten hierbei eine hohe Genauigkeit auch für den dritten Kalibrierschritt.

Von besonderem Vorteil ist der Umstand, dass die dreistufige Kalibrierung mit der Messkaskade nicht nur einmal zu Beginn bei der Einrichtung der Messstation, sondern auch zu beliebigen Zeitpunkten während des Messbetriebes durchgeführt werden kann. Die Kalibrierung ist einfach, wenig zeitaufwendig und erfordert nur einen geringen Bauaufwand. Durch die jederzeit bestehende Kalibriermöglichkeit ist die Prozesssicherheit einer Robotermessstation erstmalig in ausreichendem Maße gewährleistet. Insbesondere ist hierdurch auch die Prozessfähigkeit in ausreichendem Maße gegeben. Dies ist besonders auf Grund der immer stärker steigenden Genauigkeitsanforderungen an die Qualität von Werkstücken und insbesondere von Fahrzeugkarosserien wichtig.

Durch die hohe Mess- und Kalibriergenauigkeit sowie den geringen Bau- und Zeitaufwand können Werkstückvermessungen häufiger durchgeführt werden. Eine Vermessung kann dadurch nicht erst an der fertigen Fahrzeugkarosserie, sondern auch einige Schritte vorher bei der Bauteilfertigung stattfinden, so dass Fehler und Ausschuss schon frühzeitig erkannt und behoben werden können. Insbesondere lassen sich hierdurch auch Fehlerursachen bei den Werkstücken oder Bauteilen besser zuordnen und leichter und gezielter beheben. Zudem können durch den geringen Zeitaufwand Werkstück- oder Bauteilvermessungen häufiger und an einer größeren Zahl von Werkstücken oder Bauteilen durchgeführt werden.

Weitere Vorteile bestehen in der Möglichkeit, die Kalibrierung durch Mechaniker oder Werker ohne besondere messtechnische Fachkenntnisse und ohne spezielle und aufwendige nummerische Optimierungsprogramme durchführen zu lassen. Bei Robotermessstationen besteht ferner die Möglichkeit für eine konsequente Realisierung der CAD-/CAM-Prozesskette zur Durchführung der Messung mit Messroboter in Verbindung mit einem Datensatz. Ohne einen genau definierten TCP ist nur eine Vergleichsmessung auf ein Musterwerkstück, insbesondere eine Musterkarosserie, möglich. Außerdem erlaubt die Erfindung den Schritt von der reinen Prozessüberwachung in der Fertigung (d.h. der Prüfung, ob ein Bauteil in Ordnung oder nicht in Ordnung ist) zum Roboter gestützten Messen beliebig komplexer Werkstücke oder Bauteile.

In den Unteransprüchen sind weitere vorteilhafte Ausgestaltungen der Erfindung und der bevorzugten Verfahrensschritte sowie der Komponenten der mehrstufigen Kalibriervorrichtung angegeben.

Die Erfindung ist in den Zeichnungen beispielsweise und schematisch dargestellt. Im einzelnen zeigen:
- Figur 1:: eine Draufsicht auf eine Bearbeitungs-bzw. Vermessungsstation mit einem Messroboter, einer optischen Messeinrichtung und einer Einrichtung zur mehrstufigen Kalibrierung dieser Komponenten,
- Figur 2:: den Messroboter mit einem Kalibrierkörper in Seitenansicht,
- Figur 3 und 4:: den Kalibrierkörper in Seitenansicht und geklappter Draufsicht,
- Figur 5 und 6:: eine Variante des Kalibrierkörpers von Figur 3 und 4 in Seitenansicht und geklappter Draufsicht,
- Figur 7:: eine perspektivische Ansicht des Messroboters mit der optischen Messeinrichtung und einer Prüfeinrichtung für die Kalibrierung des Arbeitspunktes,
- Figur 8:: eine Seitenansicht der Prüfeinrichtung von Figur 7,
- Figur 9:: eine geklappte Draufsicht auf die Prüfeinrichtung von Figur 8 gemäß Pfeil IX,
- Figur 10:: eine vergrößerte Ausschnittsdarstellung der Anordnung von Figur 8,

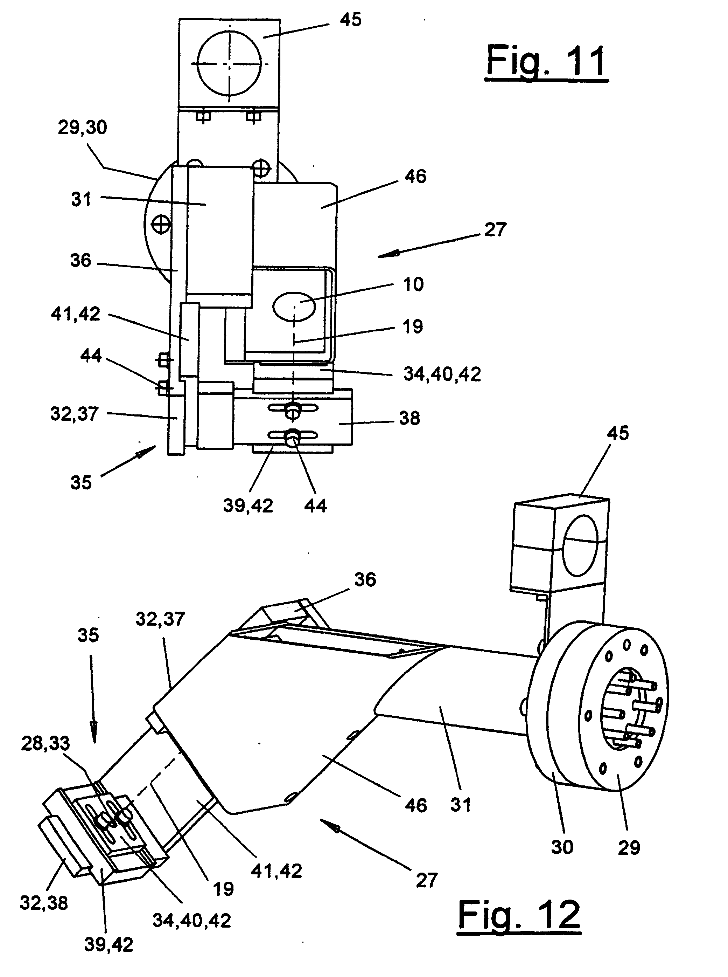

- Figur 11:: eine Frontansicht der Prüfeinrichtung gemäß Pfeil XI von Figur 8 und
- Figur 12:: eine schräg von hinten gesehene perspektivische Ansicht der Prüfeinrichtung von Figur 8 bis 11.

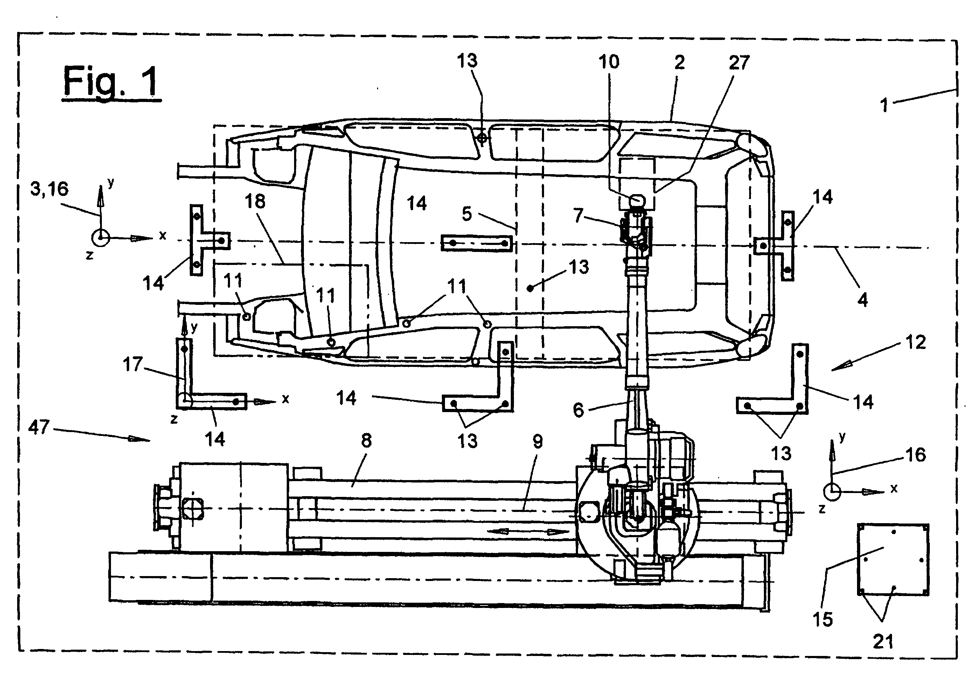

Die in Figur 1 dargestellte Bearbeitungs- oder Messstation (1) dient zur Vermessung von beliebigen Werkstücken (2). Vorzugsweise handelt es sich hierbei um die in der Zeichnung dargestellten Fahrzeugrohkarosserien und deren Bauteile, die beispielsweise entlang einer Transferlinie (4) in die Messstation (1) gebracht und wieder abtransportiert werden. Die Messstation (1) kann als eigenständige Station ausgebildet sein. Sie kann aber auch in eine Bearbeitungs- oder Fertigungsstation integriert sein, wobei die Vermessung während oder am Ende des Fertigungsvorganges stattfindet.

Die Vermessung erfolgt über einen mehrachsigen Messroboter (6), der beliebig ausgebildet sein kann. Im gezeigten Ausführungsbeispiel besitzt er sechs rotatorische Achsen. Er kann zusätzlich noch ein oder mehrere translatorische Achsen haben, z.B. eine weitere Fahrachse (9). Im gezeigten Ausführungsbeispiel ist der Messroboter (6) auf einer Lineareinheit (8) montiert und kann mit dieser translatorisch entlang der Achse (9) gegenüber dem Werkstück (2) vor- und zurückbewegt werden. Die Fahrachse (9) beziehungsweise Lineareinheit (8) sind dabei vorzugsweise parallel zur Transferlinie (4) ausgerichtet. Über die ein oder mehreren Fahrachsen (9) wird der Arbeitsbereich des Messroboters (6) vergrößert.

In Figur 1 ist der Übersichtlichkeit wegen nur ein Messroboter (6) dargestellt. Ein zweiter Messroboter (6) in gleicher oder in ähnlicher Ausbildung kann auf der gegenüberliegenden Seite angeordnet sein. Zudem können noch weitere Messroboter (6) vorhanden sein.

Der einzelne Messroboter (6) trägt an seiner Roboterhand (7) ein geeignetes Messwerkzeug, das direkt angeflanscht ist oder über eine Wechselkupplung mit der Roboterhand (7) verbunden ist. Hierbei handelt es sich um eine optische Messeinrichtung (10), z.B. einen sogenannten 3D-Sensor oder eine Messkamera mit drei kartesischen translatorischen Messachsen. Hierdurch können Messpunkte (11) oder Messobjekte an der Fahrzeugrohkarosserie oder an einem anderen Werkstück (2) dreidimensional vermessen werden. Die optische Messeinrichtung (10) kann bei Integration der Vermessung in den Fertigungsablauf gegebenenfalls gegen ein anderes Werkzeug getauscht werden.

Der Messroboter (6) besitzt eine Steuerung (20) mit einer Recheneinheit, in der die für die Vermessung erforderlichen Berechnungen durchgeführt werden. In der Steuerung können auch die Kalibrierberechnungen mit bekannten Algorithmen durchgeführt werden. Der 3D-Sensor (10) ist über eine Leitung mit der Steuerung (20) verbunden.

Das Werkstück (2) ist auf einem Werkstückträgers (5), z.B. einem sogenannten Skid für Fahrzeugkarosserien, angeordnet und wird mit diesem entlang der Transferlinie (4) bewegt. Am Werkstück (2) befinden sich ein oder mehrere definierte Messpunkte (11), die für die Werkstückgeometrie relevant sind und die eine bestimmte räumliche Position haben müssen. Bei der gezeigten Fahrzeugkarosserie (2) sind dies z.B. Bohrungen, Buckel, Kanten oder dgl. an bestimmten Stellen der Karosserie. Hierbei kann es sich auch um Karosseriebezugspunkte handeln, die in einer definierten Beziehung zu einem Fahrzeug-Koordinatensystem (3) stehen. Vor und während der Vermessungen der Werkstücke (2) wird der Messroboter (6) mit seinem 3-D-Sensor (10) mittels einer mehrstufigen Kalibriervorrichtung (47) in einer Messkaskade mit mindestens drei Kalibrierschritten kalibriert. Hierbei werden nacheinander die optische Messeinrichtung (10) mit ihrem Arbeitspunkt (28), der Messroboter (6) mit seinen Achsen und dann die Zuordnung des Messroboters (6) zum Werkstück (2) kalibriert. Die mehrstufige Kalibriervorrichtung (47) besteht aus einer Prüfeinrichtung (27) zur Kalibrierung der optischen Messeinrichtung (10), einem Kalibrierkörper (15) zur Kalibrierung des Messroboters (6) und seiner Achsen und einer Kalibriereinrichtung (12) zur Kalibrierung der Zuordnung zwischen Messroboter (6) und Werkstück (2).

Durch die mehrstufige und hierarchisch gegliederte Kalibrierung können Fehler ursachenbezogen erkannt und gezielt behoben werden. Hierdurch lässt sich die Gesamtgenauigkeit der aus Messroboter (6) und optischer Messeinrichtung (10) bestehenden Messeinheit auf 0,1 mm steigern. Diese Kalibrierung dient der Sicherstellung der Prozesssicherheit der Messstation (1) und der Messgenauigkeit des von Messroboter (6), optischer Messeinrichtung (10) und Stationsumgebung gebildeten Gesamt systems.

Wird im Messbetrieb am Werkstück (2) eine Toleranzüberschreitung festgestellt, kann mit der nachfolgend näher beschriebenen mehrstufigen Kalibrierung vor Ort sofort die Messgenauigkeit überprüft und damit die Ursache der im Messbetrieb aufgetretenen Messabweichung verifiziert werden. Es kann sofort festgestellt werden, ob der Messfehler auf einen Fehler am Werkstück (2) zurückzuführen ist oder seine Ursache im Messsystem hat. Die Kalibrierung kann darüber hinaus auch in bestimmten Abständen oder auch regellos durchgeführt werden, um im eingangs genannten Sinne die Prozesssicherheit bzw. die Prozessfähigkeit sicherzustellen.

Der erste Kalibrierschritt betrifft die optische Messeinrichtung. Diese hat einen Arbeitspunkt (28) oder sogenannten Tool-Center-Point (abgekürzt TCP), der sich in Messrichtung (19) mit einem bestimmten Abstand vor der optischen Messeinrichtung (10) befindet. Zum Vermessen des Werkstückes bewegt der Messroboter (6) die optische Messeinrichtung (10) mit ihrem Arbeitspunkt (28) an die zu vermessenden Stellen und tastet dort die Messpunkte (11) optisch ab. Hierbei wird der Messpunkt (11) dreidimensional vermessen und mit seinen Koordinaten in einem beliebig geeigneten Koordinatensystem, z. B. einem Fahrzeug-Koordinatensystem (3) angezeigt. Die Koordinaten des Arbeitspunktes (28) sind üblicherweise im Flanschkoordinatensystem des Messroboters (6) bestimmt. Bei der Vermessung des Werkstückes (2) werden die Bahnkoordinaten des Messroboters (6) und die Arbeitspunkt-Koordinaten aufgenommen und ggf. entsprechend transformiert. Der Messroboter (6) führt die Vermessungen üblicherweise unter Bezug auf sein Basis-Koordinatensystem oder auf ein World-Koordinatensystem (16) der Messstation (1) durch. Die hierauf bezogenen Koordinaten der Messpunkte (11) werden dann in die Koordinaten des Fahrzeug-Koordinatensystems (3) umgerechnet. In der Praxis werden häufig das World-Koordinatensystem (16) und das Fahrzeug-Koordinatensystem (3) zusammengelegt.

Die optische Messeinrichtung (10) ist mit genau definierter Position und Ausrichtung in einem beliebig ausgebildeten Gestell (31) untergebracht, welches mittels einer rückwärtigen Anschlussplatte (30) an einem Adapterflansch (29) der Roboterhand (7) montierbar ist. Das Gestell (31) kann ein Gehäuse (46) aufweisen, das die Messeinrichtung (10) schützend umgibt. Für die Kabelverbindung kann ein Leitungshalter (45) am Gestell (31) vorhanden sein. Die optische Messeinrichtung (10) ist z.B. schräg am Gestell (31) angeordnet, so dass ihre Messrichtung (19) schräg zur Mittelachse der Anschlussplatte (30) und des Adapterflansches (29) verläuft.

Die optische Messeinrichtung (10) ist mit einer nicht dargestellten Auswerte- und Anzeigeeinheit verbunden, wobei die Messdaten einerseits in eine Prozess- und Robotersteuerung eingegeben werden und andererseits auch an einer geeigneten Anzeige, z.B. an einem Monitor zur Darstellung gebracht werden. Hierbei kann der Bediener auch bei geeigneter Ausbildung der Messeinrichtung (10) ein Bild des gerade abgetasteten und vermessenen Werkstückbereichs sehen. Die optische Messeinrichtung (10) kann hierbei ein Fadenkreuz oder eine andere Zielmarkierung am Monitor abbilden, die den Arbeitspunkt (28) oder TCP markiert. Über den Monitor kann der Bediener außerdem den Messroboter (6) mit der Messeinrichtung (10) von Hand steuern und so die Messeinrichtung (10) mit ihrem Arbeitspunkt (28) an die gewünschte Stelle bringen und den Arbeitspunkt (28) mit dem gesuchten Messpunkt (11) am Werkstück in Deckung bringen. Der Monitor mit der Visier- oder Zielanzeige kann auch für die nachfolgend näher erläuterte Prüfeinrichtung (27) verwendet werden.

Die Prüfeinrichtung (27) besteht aus einem Halter (32), der ein Referenzmuster (33) trägt, welches vorzugsweise nach Art und Größe den Messpunkten (11) oder Messobjekten entspricht, die der Messroboter (6) üblicherweise in der Messstation (1) anmisst. Im gezeigten Ausführungsbeispiel ist das Referenzmuster (33) eine Bohrung in einer Musterplatte (34). Es kann sich alternativ auch um einen Buckel, einen Kegel, eine Kante oder dergleichen handeln.

Die -Prüfeinrichtung (27) beinhaltet ferner noch eine Stelleinrichtung (35), mit der eine Relativverstellung zwischen dem Referenzmuster (33) und der optischen Messeinrichtung (10) möglich ist. In der gezeigten Ausführungsform ist die Stelleinrichtung (35) dem Halter (32) zugeordnet. Die Stelleinrichtung (35) hat vorzugsweise mindestens so viele Stellachsen (39,40,41) wie die optische Messeinrichtung (10) optische Messachsen hat. Die Stellachsen (39,40,41) und die optischen Messachsen sind außerdem in gleicher Weise ausgerichtet und orientiert.

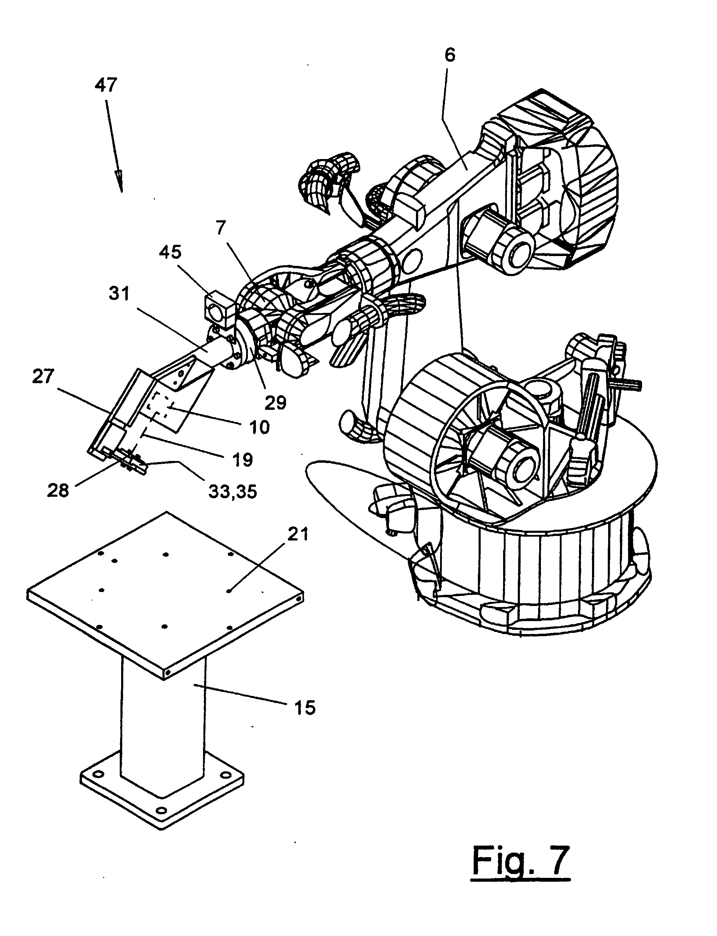

Der Halter (32) bringt für den Prüf- und Kalibriervorgang das Referenzmuster (33) temporär an den Arbeitspunkt (28) vor der optischen Messeinrichtung (10). Für den normalen Messbetrieb muss das Referenzmuster (33) dann wieder entfernt werden. Zu diesem Zweck kann der Halter (32) entweder lösbar oder zwischen einer Ruhe- und einer Prüfposition hin- und herbeweglich am Gestell (31) der Messeinrichtung (10) angeordnet bzw. gelagert sein. In der in Figur 7 gezeigten Prüfposition nimmt der Halter (32) eine genau definierte Lage gegenüber dem Gestell (31) ein. In der gezeigten Ausführungsform ist der Halter (32) lösbar angeordnet und besitzt eine entsprechende Befestigung (36) zur genauen Positionierung am Gestell (31).

Der Halter (32) hat einen Längsarm (37), der sich im wesentlichen parallel zur Längsachse des Gestells (31) bzw. zur Messrichtung (19) erstreckt. Der Längsarm (37) ragt in Messrichtung (19) ein Stück über das Gestell (31) und die optische Messeinrichtung (10). Am vorderen Ende befindet sich ein Querarm (38), der vorzugsweise senkrecht zum Längsarm (37) angeordnet ist. Der Winkel hängt von der Lage und Ausrichtung der optischen Messachsen und Gestellachsen (39,40,41) ab.

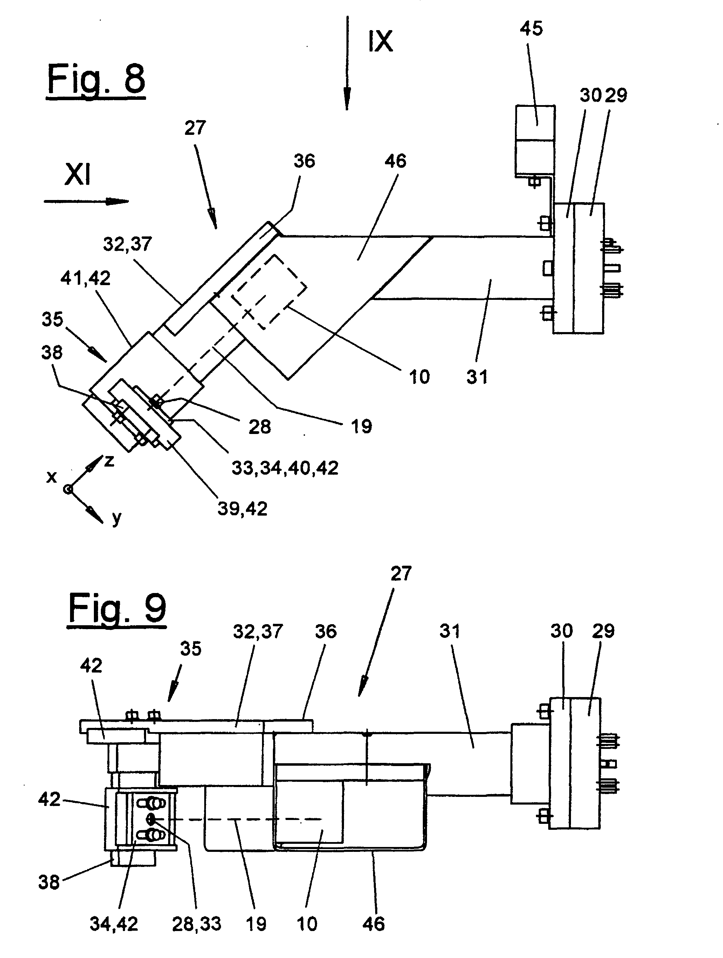

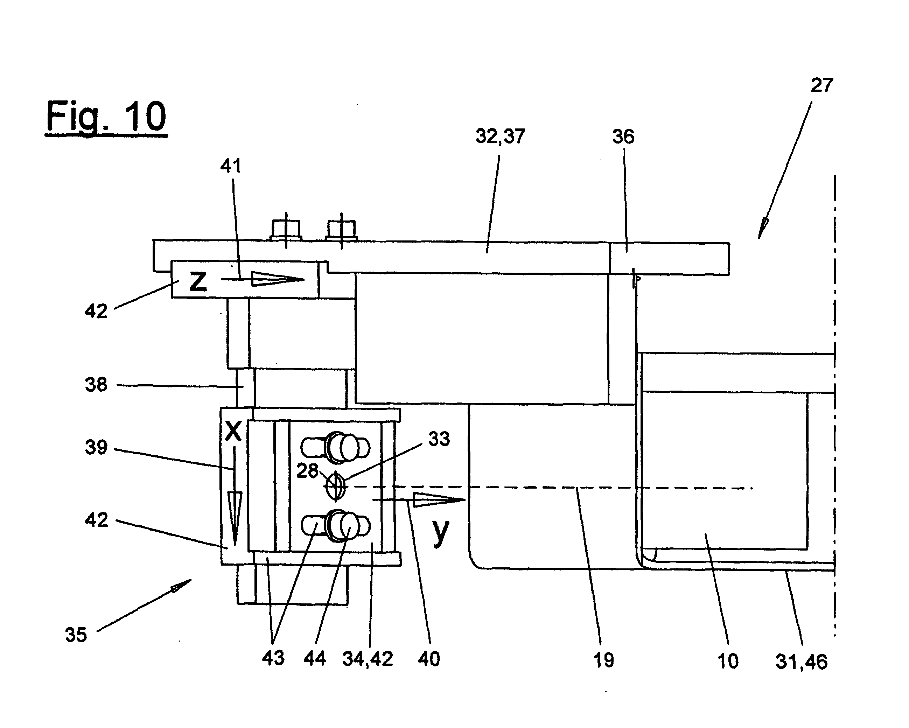

Die dem Halter (32) zugeordnete Stelleinrichtung (35) besteht aus mehreren Stellschlitten (42), die bei der gezeigten Ausführungsform in drei kartesischen Stellachsen (39,40,41) gegeneinander beweglich sind. Figur 8 und 10 zeigen hierzu die näheren Einzelheiten.

Der Querarm (38) ist an einem Stellschlitten (42) befestigt, der am Längsarm (37) in Z-Richtung mit der Stellachse (41) verschieblich gelagert ist. Die Stellachse (41) bzw. die Z-Achse erstreckt sich längs der Messrichtung (19) und bestimmt den Abstand des Arbeitspunktes (28) von der optischen Messeinrichtung (10). Der Stellschlitten (42) ist in einer entsprechenden Führung (nicht dargestellt) exakt in Richtung der Z-Achse geführt und kann über eine Fixiereinrichtung (44), z.B. über zwei Spannschrauben, an der gewünschten Positionfixiert werden.

Am Querarm (38) ist ein weiterer Stellschlitten (42) verschieblich und mit genauer Führung gelagert, der sich in Richtung der Stellachse (39) bzw. der X-Achse quer gegenüber der Messrichtung (19) bewegen kann. Auch hier ist eine geeignete Fixiereinrichtung (44) mit Spannschrauben oder dergleichen vorhanden.

Der dritte Stellschlitten (42) wird von der Musterplatte (34) mit dem Referenzmuster (33) gebildet und ist auf dem in der X-Achse verschieblichen Stellschlitten (42) am Querarm (38) querverschieblich gelagert. Die Musterplatte (34) bzw. der hierdurch gebildete Stellschlitten (42) kann in Richtung der Stellachse (40) bzw. der Y-Achse quer zur Messrichtung (19) bewegt werden. Die Musterplatte (34) wird hierbei über seitliche Führungen (43) exakt in Achsrichtung geführt und über eine Fixiereinrichtung (44) mit Spannschrauben oder dergleichen befestigt. Die Spannschrauben (44) können in stellachsparallelen Langlöchern durch den jeweiligen Stellschlitten (42) greifen.

Für die erstmalige Justierung oder Kalibrierung der Prüfeinrichtung (27) wird zunächst der-Halter (32) am Gestell (31) montiert und anschließend das Referenzmuster (33) durch Verschiebung der Stellschlitten (42) in den drei Stellachsen (39,40,41) an die Position des Arbeitspunktes (28) der optischen Messeinrichtung (10) gebracht. Die Schlittenverstellung kann optisch in der vorbeschriebenen Weise über den Monitor kontrolliert werden, indem das Referenzmuster (33) mit der Zielanzeige bzw. dem Fadenkreuz der optischen Messeinrichtung (10) zur Deckung gebracht wird. Die Kontrolle kann aber auch auf andere Weise erfolgen. In der korrekten Position werden dann die Stellschlitten (42) über die Fixiereinrichtung (44) dauerhaft fixiert. Das Gestell (31) mit der optischen Messeinrichtung (10) und der angebauten Prüfeinrichtung (27) kann dann auf einer geeigneten Messmaschine, z.B. einer Koordinatenmessmaschine genau vermessen werden, wobei die Koordinaten des Arbeitspunktes oder TCP (28) bezogen auf das Flanschkoordinatensystem der Roboterhand (7) oder auf ein anderes geeignetes Koordinatensystem genau vermessen und bestimmt werden. Die TCP-Koordinaten können dann mittels einer Plakette oder dergleichen am Gestell (31) und an der Prüfeinrichtung (27) vermerkt werden. Nach der Justierung und Vermessung kann die Prüfeinrichtung (27) abgebaut und beiseite gelegt werden. Die gemessenen TCP-Koordinaten werden in die Robotersteuerung eingegeben. Danach kann der normale Messbetrieb aufgenommen werden.

Für die Gewährleistung der Prozesssicherheit ist es wichtig, die Messeinrichtung (10) und die Lage des Arbeitspunktes (28) bei den vorgenannten Anlässen zu überprüfen und eventuell nachzukalibrieren. Eine solche Überprüfung findet auch bei eventuellen Kollisionen des Messroboters (6) statt. In diesem Fall wird die Prüfeinrichtung (27) mit dem Halter (32) an das Gestell (31) lagegenau montiert. Das fixierte Referenzmuster (33) befindet sich an der Soll-Position des Arbeitspunktes (28). Durch optischen Vergleich oder auch durch Messvergleich bei Betätigung der Messeinrichtung (10) kann festgestellt werden, ob die Ist-Lage des Arbeitspunktes (28) noch mit der eingemessenen Soll-Position übereinstimmt. Wenn nicht, ist eine Nachjustierung in der vorbeschriebenen Weise und eine Neuvermessung erforderlich.

In ähnlicher Weise wird vorgegangen, wenn bei einem Schaden oder aus anderen Gründen die optische Messeinrichtung (10) ausgetauscht werden muss. Die neue Messeinrichtung (10) hat in der Regel einen anderen Arbeitspunkt (28). Nach dem Tausch ist wiederum der vorbeschriebene Justiervorgang mit der nachfolgenden Vermessung und Bestimmung der TCP-Koordinaten durchzuführen. Bei den vorgenannten Nachjustierungen werden dann jeweils die Stellschlitten (42) und das Referenzmuster (33) in der neuen Soll-Lage fixiert. Die verstellte Prüfeinrichtung (27) kann dann wieder abgenommen und für spätere Überprüfungen eingelagert werden. Hierbei wird ihre Zuordnung zu der optischen Messeinrichtung (10) und dem Gestell (31) vermerkt.

In der genannten Weise kann auch für einen schnellen Gerätetausch im Fall von größeren Schäden und Kollisionen eine zweite optische Messeinrichtung (10) nebst Gestell (31) und zugehöriger Prüfeinrichtung (27) justiert und vermessen werden. Sie lässt sich im Kollisionsfall schnell gegen die beschädigte Einrichtung auswechseln, wobei vom Bediener dann nur die geänderten TCP-Koordinaten, die auf der Austauscheinrichtung vermerkt sind, in die Robotersteuerung zur Korrektur der Bahnwerte eingegeben wird. Der Messbetrieb kann dann gleich wieder aufgenommen werden. Die Unterbrechung des Messbetriebes dauert hierdurch nur sehr kurze Zeit.

Die Justierung der Prüfeinrichtung (27) und die Überprüfung von Soll- und Ist-Lage des Arbeitspunktes (28) kann an einer am Messroboter (6) montierten optischen Messeinrichtung (10) durchgeführt werden. Alternativ kann die optische Messeinrichtung (10) für die Justierung und Überprüfung auch vom Messroboter (6) abgebaut werden.

In einer anderen nicht dargestellten Bauvariante ist die Stelleinrichtung (35) der optischen Messeinrichtung (10) zugeordnet. Hierdurch lässt sich die Messeinrichtung (10) in den genannten Stellachsen (39,40,41) verschieben und fixieren. Der Halter (32) mit dem Längs- und Querarm (37,38) und der Musterplatte (34) mit dem Referenzmuster (33) kann in diesem Fall starr ausgebildet sein. Das Referenzmuster (33) gibt die Soll-Position des Arbeitspunktes (28) und die TCP-Koordinaten fest vor. Über die Stelleinrichtung (35) wird dann die optische Messeinrichtung (10) auf die vorgegebene Lage des Arbeitspunktes (28) eingestellt, wobei Soll- und Ist-Position des Arbeitspunktes (28) zur Deckung gebracht werden. Bei dieser Bauform ist bei der Überprüfung des Arbeitspunktes (28) zugleich eine Kalibrierung und Justierung möglich. Eine gesonderte Vermessung der optischen Messeinrichtung (10) mit dem Gestell (31) und der Prüfeinrichtung (27) ist in diesem Fall entbehrlich. Sobald die Soll- und Ist-Position des Arbeitspunktes (28) zur Deckung gebracht sind, liegen auch die hierfür vorab ermittelten TCP-Koordinaten fest. Diese Kalibrierung oder Justierung kann in der Einbaulage am Messroboter (6) durchgeführt werden. Eine separate Vermessung auf einer Koordinatenmessmaschine ist dabei entbehrlich.

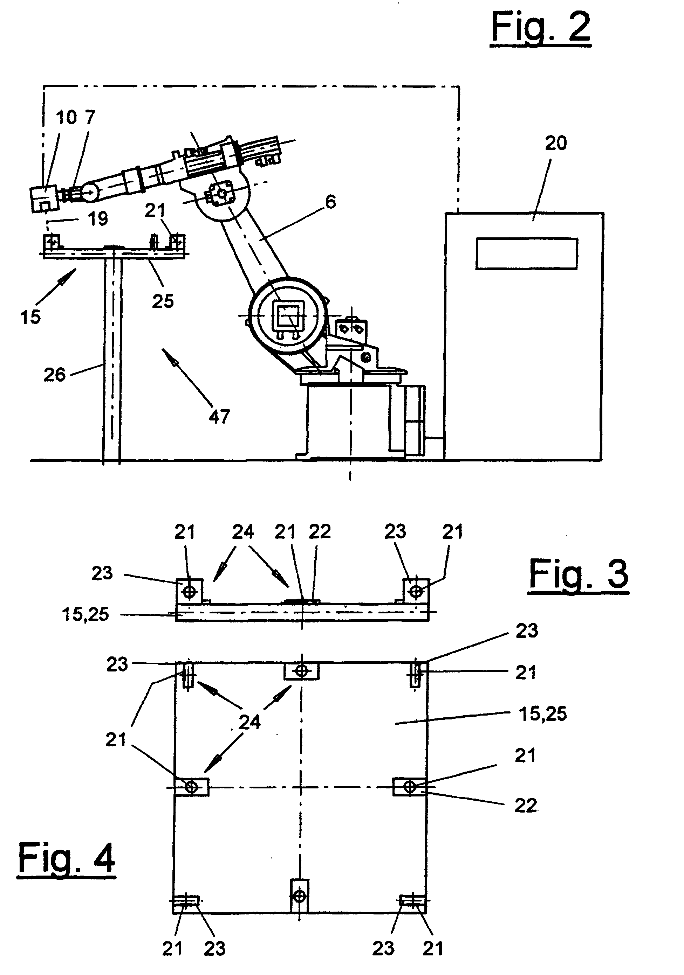

Der zweite Kalibrierschritt betrifft den Messroboter (6) und eine Kompensation seiner relativen Achsenfehler (z.B. Denavit-Hartenberg Parameter). Die Achskalibrierung des Messroboters (6) wird mit Hilfe des Kalibrierkörpers (15) durchgeführt, der in Figur 2 bis 6 in größerer Detaillierung dargestellt ist.

Der Kalibrierkörper (15) ist z.B. als Kalibriertisch ausgebildet und besteht aus einer Trägerplatte (25) oder einem anderen beliebigen Tragkörper mit mindestens einer ebenen Fläche, an der die nachfolgend näher erläuterten Messmarken (21) angeordnet sind. Die Trägerplatte (25) ist mittels eines Gestells (26), z.B. einer Tragsäule ortsfest positionierbar angeordnet. Der fest positionierte Kalibrierkörper (15) wird mit Bezug auf das maßgebliche Koordinatensystem der Messstation, vorzugsweise das World-Koordinatensystem oder das Basis-Koordinatensystem des Messroboters (6) in geeigneter Weise vermessen, so dass die Messmarken (21) eine bekannte und sehr genau bestimmbare Position in diesem Koordinatensystem haben.

Der Kalibrierkörper (15) hat auf der Oberfläche der Trägerplatte (25) mehrere Messmarken (21), die liegend und/oder stehend angeordnet sein können. Die Messmarken (21) bilden Messpunkte (24), die der Messroboter (6) mit dem 3D-Sensor (10) mit unterschiedlichen Orientierungen seiner Achsen und Bauteile anfährt und vermisst. An jeweils einer Messmarke (21) können daher mehrere Messungen mit unterschiedlichen Roboterorientierungen durchgeführt werden. Dementsprechend'ergeben sich aus einer Messmarke (21) mehrere Messpunkte (24). Vorzugsweise werden für eine Kalibrierung dreißig oder mehr Messpunkte (24) am Kalibrierkörper (15) aufgenommen.

Zumindest ein Teil der Messmarken (21), vorzugsweise alle Messmarken (21), haben eine rotationssymmetrische ebene Kontur. Die Messmarken (21) können z.B. als kreisförmige dünne Plättchen oder als kreisförmige Öffnungen ausgebildet sein. Sie haben eine für den 3D-Sensor (10) erkennbare andere Farbe oder Helligkeit gegenüber der Umgebung. Sie sind insbesondere so gestaltet beziehungsweise angeordnet, dass der 3D-Sensor (10) die rotationssymmetrischen Ränder der Messmarken (21) sicher gegenüber der Umgebung optisch erfassen und in ihrer Position und Ausrichtung vermessen kann.

Beim Anfahren und Vermessen der Messmarken (21) bewegt der Messroboter (6) den 3D-Sensor (10) in Soll-Positionen mit soll-Ausrichtungen gegenüber der bekannten Position und Ausrichtung der angefahrenen Messmarke (21). Die Messmarken (21) erscheinen dabei aus allen Blickrichtungen des 3D-Sensors (10) stets in gleicher Lage mit gleicher Form und Größe. Als kreisrunde ebene Marken haben sie den Vorteil, dass sie vom Messwerkzeug (10) aus jeder Orientierung heraus als Kreise oder Ellipsen erkannt werden, wobei der Mittelpunkt ohne größeren Aufwand erfasst und berechnet werden kann.

wenn der Messroboter (6) durch Positionierfehler in seinen Achsen, durch thermisch bedingte Längenänderungen seiner Bauteile oder aus anderen Fehlergründen die Messmarke (21) nicht an der erwarteten Position findet, sondern an einer anderen Stelle, lässt sich aus dem Versatz anhand bekannter Kalibrier-Algorithmen der Positionierfehler errechnen. Aus einer Vielzahl solcher Mess- und Rechenvorgänge können dann die vorhandenen Positionierfehler des Messroboters (6) erfasst und beim Messroboter (6) unter entsprechender Korrektur seiner Maschinendaten kompensiert werden.

Im Ausführungsbeispiel von Figur 3 und 4 ist ein Teil der Messmarken (21) an vorzugsweise senkrecht auf der Plattenoberfläche stehenden Markenhaltern (23) angeordnet, die in geeigneter Weise auf einer relativ dünnen Trägerplatte (25) befestigt sind. Die Befestigung kann durch Kleben oder auf andere geeignete Weise erfolgen. Die liegenden Messmarken (21) können direkt auf der Trägerplatte (25) als Plättchen oder als Bohrungen angebracht sein. Sie können sich aber auch in der gezeigten Ausführungsform auf liegenden Markenhaltern (22) befinden. Die Messmarken (21) haben vorzugsweise untereinander die gleiche Form und Größe. Vorzugsweise ist an jedem Markenhalter (22,23) eine Messmarke (21) angebracht.

Die Messmarken (21) beziehungsweise ihre Markenhalter (22,23) sind am Rand beziehungsweise Umfang der Trägerplatte (25) verteilt und mit gegenseitigem Abstand angeordnet. Die Verteilung kann im wesentlichen regelmäßig sein, wobei allerdings die Abstände teilweise differieren können. Die Anordnung der Messmarken (21) ist vorzugsweise so getroffen, dass die Messmarken (21) abwechselnd eine unterschiedliche Orientierung aufweisen. Hierbei wechseln sich in Umfangsrichtung stehende und liegende Messmarken (21) vorzugsweise ab. Die stehenden Messmarken (21) sind zudem vorzugsweise an unterschiedlichen Seiten ihrer Markenhalter (23) angeordnet. Die stehenden Markenhalter (23) sind zueinander jeweils um 90° verdreht. Die stehenden Messmarken (21) weisen vorzugsweise alle nach außen, können aber auch anders orientiert sein.

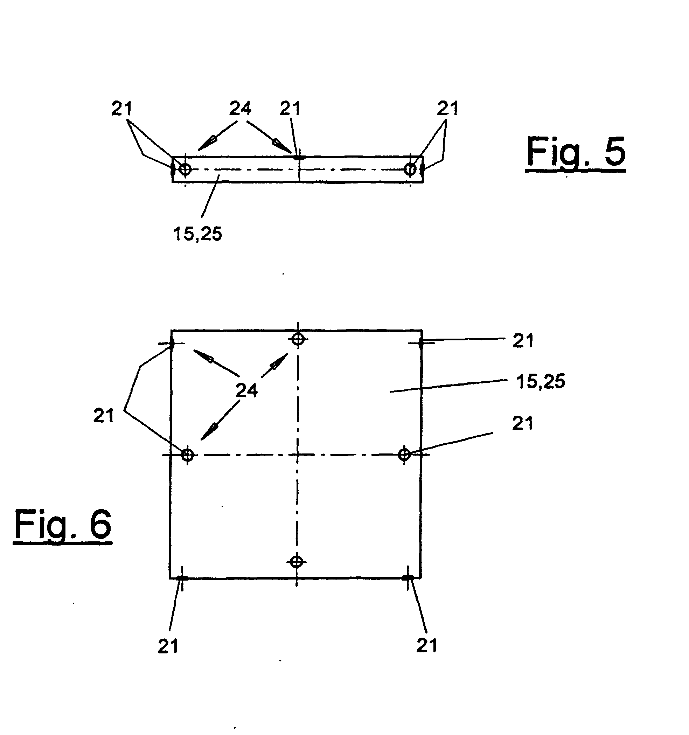

Figur 5 und 6 zeigen eine Variante des Kalibrierkörpers (15). Dieser besteht aus einer dickeren Trägerplatte (25), auf deren Deck- und Seitenflächen die Messmarken (21) direkt angebracht sind. Die Trägerplatte (25) ist aus einem geeigneten formbeständigen Material, z.B. aus einer verzugsfesten Metalllegierung gefertigt. Vorzugsweise haben die Messmarken (21) die Form von kreisrunden flachen Öffnungen oder Vertiefungen, die beispielsweise eingefräst sind. Der Boden der Vertiefung kann eben sein. Alternativ können die Messmarken (21) auch aus Plättchen, Farbmarkierungen oder dgl. bestehen. Die Vertiefungen beziehungsweise Messmarken (21) können in der gleichen Weise wie im Ausführungsbeispiel von Figur 3 und 4 angeordnet und verteilt sein.

Der Kalibrierkörper (15) hat für die gewünschte Fehlerzuordnung und die gezeigte Roboterkinematik wenigstens drei Messmarken (21) oder Messpunkte (24). Für eine Roboterkinematik mit weniger Freiheitsgraden können auch weniger Messmarken (21) bzw. Messpunkte (24) genügen. In der bevorzugten Ausführungsform sind für den gezeigten Messroboter (6) in einer optimierten Ausgestaltung acht oder mehr Messmarken (21) bzw. Messpunkte (24) mit unterschiedlicher Position und Orientierung vorhanden. Deren Zahl kann auch größer als acht sein.

Der Kalibrierkörper (15) bzw. seine Trägerplatte (25) hat eine vergleichweise geringe Ausdehnung und besitzt in der gezeigten und bevorzugten Ausführungsform mit der im wesentlichen quadratischen Plattenform eine Kantenlänge von ca. 500 - 600 mm. Mit seinem Säulenfuß baut der Kalibrierkörper (15) dadurch so klein, dass er innerhalb der Messstation an beliebig geeigneten Stellen im Arbeitsbereich des Messroboters (6) untergebracht werden kann. Dabei können innerhalb der Messstation (1) auch mehrere solcher Kalibrierkörper (15) vorhanden sein. Dies gilt insbesondere, wenn der Messroboter (6) ein oder mehrere zusätzliche translatorische Verfahrachsen (9) besitzt.

Der dritte Kalibrierschritt betrifft die Zuordnung des Messroboters (6) und der optischen Messeinrichtung (10) zum Werkstück (2). Diese Zuordnung kann sich aus verschiedenen Gründen verändern. Zum einen ist eine Veränderung über die zusätzliche Fahrachse (9) gegeben. Darüber hinaus kann aber auch ein stationär angeordneter Messroboter (6) durch Setzungen an seinem Fundament oder aus anderen Gründen die richtige Zuordnung zum Werkstück (2) verlieren. Für diesen dritten Kalibrierschritt wird die nachfolgend näher beschriebene Kalibriereinrichtung (12) eingesetzt.

In der Messstation (1) sind in der Nähe der Messpunkte (11) oder der Messräume am Werkstück (2) mehrere Kalibriermarken (13) angeordnet. Sie befinden sich seitlich neben oder unter dem Werkstück (2). Kalibriermarken (13) können auch am Werkstück (2) selbst angebracht sein und definieren z.B. vorgegebene sogenannte Referenz-Positions-System-Punkte (RPS) am Werkstück (2). Dies können z.B. Bezugsbohrungen an der Fahrzeugrohkarosserie sein.

Die Kalibriermarken (13) sind Bestandteil der Kalibriereinrichtung (12), die ferner mehrere in genau bekannten Positionen stationär angeordnete Markenträger (14) mit jeweils drei Kalibriermarken (13) aufweisen kann. Die Markenträger (14) haben beispielsweise eine Winkelform, wobei die Kalibriermarken (13) im Eckbereich und an den Schenkelenden angeordnet sind. Alternativ können die Markenträger (14) auch eine T-Form mit drei Kalibriermarken (13) an den Schenkelenden oder eine einfache Balkenform mit zwei Kalibriermarken (13) aufweisen. Die Kalibriermarken (13) können in gleicher oder in unterschiedlicher Höhe an den Markenträgern (14) angeordnet sein.

Außerdem können ein oder mehrere Kalibriermarken (13) am Werkstückträger (5) oder der Werkzeuggrundplatte angeordnet sein. Wie Figur 1 verdeutlicht, ist z.B. eine Kalibriermarke (13) an einer Querstrebe des Skids befestigt. Auch diese Kalibriermarke (13) befindet sich in räumlicher Nähe zu ein oder mehreren Messpunkten (11) an der Fahrzeugkarosserie (2).

Die Kalibriermarken (13) können in gleicher Weise wie die vorbeschriebenen Messmarken (21) am Kalibrierkörper (15) ausgebildet sein und haben ebenfalls vorzugsweise eine kreisrunde Form oder Kontur. Sie bestehen aus Öffnungen in den Markenträgern (14) beziehungsweise dem Werkstückträger (5) oder aus aufgebrachten kreisrunden Blättchen. Alternativ kann es sich auch um Farbmarken oder dergleichen handeln. Die Kalibriermarken (13) sind optisch erfassbare Marken.

Alternativ können die Kalibriermarken (13) je nach Art des Messwerkzeugs (10) auch in beliebig anderer Weise ausgebildet sein. In Figur 1 sind sie außerdem nur zum Teil dargestellt. Auf der anderen Karosserieseite , d.h. in +y-Richtung sowie in +z-Richtung verschoben können sich ähnliche Kalibriermarken (13) befinden.

Der Messroboter (6) führt eine absolute Vermessung an den Messpunkten (11) durch. Mit den Kalibriermarken (13) kann durch eine Verkleinerung des Arbeitsraumes auf kleinere Teilarbeitsräume (18) die absolute Positionier- und Messgenauigkeit des Messroboters verbessert, kontrolliert und gesichert werden. Durch ihre bekannte Position und ihre Nähe zu den Messpunkten (11) des Werkstücks (2) können die beim Messroboter (6) im Bewegungs- und Auslegerbereich bis zu den Kalibriermarken (13) eventuell auftretenden Positionierfehler erkannt und kompensiert werden. In dem verbleibenden kleinen Restweg von den Kalibriermarken (13) bis zu den Messpunkten (11) ist ein eventuell auftretender Fehler minimal.

An den Kalibriermarken wird außerdem ein vorzugsweise kartesisches Messkoordinatensystem (17) aufgespannt, in dem die Messungen innerhalb des zugehörigen Teilarbeitsraums (18) durchgeführt werden. Durch die bekannte absolute Lage der Kalibriermarken (13) und des Messkoordinatensystems (17) ist eine einfache Koordinatentransformation der gemessenen Messpunkt-Koordinaten in das Fahrzeug-Koordinatensystem (3) oder ein anderes gewünschtes Koordinatensystem möglich.

Der Messroboter (6) fährt für die Kalibrierung die Kalibriermarken am Kalibrierkörper (15) an, vermisst diese, berechnet daraus eventuelle Positionierfehler, und kompensiert diese in den Maschinendaten über geeignete Rechen- und Steuerprogramme in der Robotersteuerung (globale Kompensation der Positionierfehler des Roboters).

Bei der lokalen Kompensation, die der zusätzlichen Verbesserung der absoluten Positioniergenauigkeit dient, fährt der Messroboter (6) mit seinem Messwerkzeug (10) einen oder mehrere, vorzugsweise alle Markenträger (14) des Teilarbeitsraumes an und vermisst mindestens drei dort befindliche Kalibriermarken (13). Der Messroboter (6) wird dabei kalibriert und "eingenullt". Bei der Kalibrierung werden seine in der Robotersteuerung für die Kalibriermarken (13) ermittelten Sollkoordinaten mit den aus der Vermessung bekannten Ortskoordinaten der Kalibriermarken (13) überschrieben.

Je drei Kalibriermarken (13) spannen das lokale Messkoordinatensystem (17) auf. Der Kalibriervorgang kann auch während des Serien-Messbetriebs ein- oder mehrmals wiederholt werden. Dabei werden während des Betriebs eventuell auftretende Einflüsse absoluter Fehler entdeckt und kompensiert, z.B. durch Verschleiß hervorgerufene Änderungen der Roboterbauteile.

Der Arbeits- und Messbereich des oder der Messroboter (6) kann einerseits über die Fahrachse(n) (9) und andererseits über eine Verschiebebewegung des Werkstückträgers (5) mit dem Werkstück (2) vergrößert werden. Wenn eine solche Relativbewegung zwischen Messroboter (6) und Werkstück (2) stattfindet, wird nach Ende der Bewegung und vor Aufnahme der Vermessungsarbeiten eine Kalibrierung durchgeführt. Wenn der Messroboter (6) sich entlang seiner Fahrachse(n) (9) bewegt, kalibriert er sich an ein oder mehreren stationären Markenträgern (14) und deren Kalibriermarken (13). Wenn das Werkstück (2) sich bewegt, findet die Kalibrierung über ein oder mehrere Kalibriermarken (13) am Werkstückträger (5) statt. Trotz Vergrößerung des Arbeitsraumes durch eine Fahrachse (9) liegt infolge der lokalen Kalibrierung in unmittelbarer Bauteilnähe keine schlechtere Messgenauigkeit vor. Über diese Kalibriermarken (13) am Werkstückträger (5) kann zudem die Position des Werkstücks (2) beziehungsweise des Werkstückträgers (5) aufgenommen und für die Vermessung der Messpunkte (11) herangezogen werden. Auf diese Weise erfolgt eine exakte Bestimmung der aktuellen Bauteillage in Bezug auf das World- bzw. Roboterbasis-Koordinatensystem.

Abwandlungen der gezeigten Ausführungsform sind in verschiedener Weise möglich. Zum einen können die Ausbildung und Zahl der Werkstücke (2) und deren Transport variieren. Veränderlich sind zudem Zahl und Ausbildung der Messroboter (6). Der Messroboter (6) kann statt als mehrachsiger Industrie-Gelenkroboter auch als einfache Bewegungsmaschine, z.B. als Kreuzschlitten oder dergleichen, ausgestaltet sein.

Auch die optische Messeinrichtung (10) kann eine andere Ausbildung und auch eine andere Zahl und Orientierung ihrer optischen Messachsen haben. Dementsprechend ändern sich die Stellachsen (39,40,41) der Stelleinrichtung (35). Vorzugsweise stimmen die Stellachsen und die optischen Messachsen in Zahl und Ausrichtung überein. Die Stelleinrichtung (35) kann alternativ aber auch mehr oder weniger Stellachsen und eine andere Orientierung ihrer Stellachsen aufweisen. Variabel ist auch die konstruktive Ausbildung der Stelleinrichtung (35). Gleiches gilt für die konstruktive Gestaltung der Prüfeinrichtung (27) mit dem Halter (32) und den anderen Teilen.

Je nach Art der Messpunkte (11) am Werkstück (2) kann zudem die Zahl und Anordnung der Kalibriermarken (13) beziehungsweise der Markenträger (14) variieren. Veränderlich ist auch die Form der Markenträger (14) und der Kalibriermarken (13) sowie der Messmarken (21). Variabel ist zudem die Ausbildung des Tragkörpers bzw. der Trägerplatte (25) sowie die Gestaltung der Markenhalter (22,23). Veränderbar ist auch die Positionierung und Orientierung der Messmarken (21) bzw. ihrer Markenhalter (22,23) am Kalibrierkörper (15). Auch die Abmessungen können verschieden sein.

### BEZUGSZEICHENLISTE

- 1: Bearbeitungsstation, Messstation
- 2: Werkstück, Fahrzeugkarosserie
- 3: Fahrzeug-Koordinatensystem
- 4: Transferlinie, Längsachse
- 5: Werkstückträger, Skid
- 6: Messroboter
- 7: Roboterhand
- 8: Lineareinheit
- 9: Fahrachse
- 10: optische Messeinrichtung, 3D-Sensor
- 11: Messpunkt
- 12: Kalibriereinrichtung
- 13: Kalibriermarke
- 14: Markenträger
- 15: Kalibrierkörper, Messkörper, Messplatte
- 16: World-Koordinatensystem
- 17: Messkoordinatensystem
- 18: Teilarbeitsraum
- 19: Sensorstrahl, Messrichtung
- 20: Steuerung
- 21: Messmarke, Kalibriermarke
- 22: Markenhalter, liegend
- 23: Markenhalter, stehend
- 24: Messpunkt
- 25: Trägerplatte
- 26: Gestell
- 27: Prüfeinrichtung, Kalibriereinrichtung
- 28: Arbeitspunkt, Tool-Center-Point, TCP
- 29: Adapterflansch
- 30: Anschlussplatte
- 31: Gestell Messeinrichtung
- 32: Halter
- 33: Referenzmuster, Bohrung
- 34: Musterplatte
- 35: Stelleinrichtung
- 36: Befestigung
- 37: Längsarm
- 38: Querarm
- 39: Stellachse x-Achse
- 40: Stellachse y-Achse
- 41: Stellachse z-Achse
- 42: Stellschlitten
- 43: Führung
- 44: Fixiereinrichtung, Spannschraube
- 45: Leitungshalter
- 46: Gehäuse
- 47: Vorrichtung zur mehrstufigen Kalibrierung

## Patentansprüche

1. Verfahren zum Kalibrieren von mehrachsigen Messrobotern (6) und mitgeführten optischen Messeinrichtungen (10), insbesondere 3D-Sensoren, innerhalb einer Messstation (1) für Werkstücke (2), insbesondere für Fahrzeugrohkarosserien, **dadurch gekennzeichnet, dass** die Kalibrierung in einer Messkaskade mit mindestens drei aufeinander folgenden Kalibrierschritten erfolgt, wobei im ersten Schritt die optische Messeinrichtung (10) mit ihrem Arbeitspunkt (28) kalibriert wird, wonach der Messroboter (6) mit seinen Achsen mit Hilfe der mitgeführten optischen Messeinrichtung (10) kalibriert wird, wobei der Positionierfehler unter Korrektur der Maschinendaten des Messroboters (6) kompensiert wird und dann die Zuordnung des Messroboters (6) zum Werkstück (2) mit Hilfe der mit geführten optischen Messeinrichtung (10) kalibriert wird.

2. Verfahren nach Anspruch 1, **dadurch gekennzeichnet, dass** die optische Messeinrichtung (10) mit ihrem Arbeitspunkt (28) am Messroboter (6) mittels einer genau positionierbaren Prüfeinrichtung (27) mit einem Referenzmuster (33) kalibriert wird, welches im Bereich des Arbeitspunkts (28) temporär positioniert und durch eine Relativbewegung gegenüber der optischen Messeinrichtung (10) mit dem Arbeitspunkt (28) zur Deckung gebracht wird, wonach das Referenzmuster (33) zur Ermittlung der Orts-Koordinaten des Arbeitspunktes (28) vermessen wird.

3. Verfahren nach Anspruch 1 oder 2, **dadurch gekennzeichnet, dass** zum Nachkalibrieren der optischen Messeinrichtung (10) die zugehörige Prüfeinrichtung (27) mit dem in der Soll-Lage des Arbeitspunktes (28) fixierten Referenzmuster (33) in Position gebracht und die Übereinstimmung von Soll- und Ist-Lage überprüft wird, wobei zur Korrektur eventueller Abweichungen die optische Messeinrichtung (10) nachgestellt wird oder das Referenzmuster (33) nachgestellt und zur Ermittlung der Orts-Koordinaten des Arbeitspunktes (28) erneut vermessen wird.

4. Verfahren nach Anspruch 1, 2 oder 3, **dadurch gekennzeichnet, dass** der Messroboter (6) mit seinen Achsen an einem Kalibrierkörper (15) mit mindestens einer Messmarke (21) mit einer ebenen rotationssymmetrischen Kontur kalibriert wird, wobei die Messmarke (21) mit der optischen Messeinrichtung (10) aus unterschiedlichen Richtungen und mit unterschiedlichen Achsorientierungen des Messroboters (6) angefahren wird.

5. Verfahren nach einem der Ansprüche 1 bis 4, **dadurch gekennzeichnet, dass** der Messroboter (6) zur Kalibrierung seiner Zuordnung zum Werkstück (2) mit der optischen Messeinrichtung (10) ein oder mehrere Kalibriermarken (13) am Werkstück (2) und/oder am Werkstückträger (5) und/oder an mindestens einem Markenträger (14) mit bekannter Position anfährt und vermisst.

6. Verfahren nach einem der Ansprüche 1 bis 5, **dadurch gekennzeichnet, dass** an den Kalibriermarken (13) ein Messkoordinatensystem (17) aufgespannt wird, in dem die Messungen erfolgen.

7. Verfahren nach einem der Ansprüche 1 bis 6, **dadurch gekennzeichnet, dass** bei der Kalibrierung im Bereich der Kalibriermarken (13) und im Bereich von Messpunkten (11) am Werkstück Teilarbeitsräume (18) generiert werden.

8. Verfahren nach einem der Ansprüche 1 bis 7, **dadurch gekennzeichnet, dass** der Messroboter (6) und/oder das Werkstück (2) beim Vermessen im normalen Messbetrieb relativ zueinander bewegt werden, wobei nach der Bewegung vor der nächsten Vermessung eine Kalibrierung des Messroboters (6) an den Kalibriermarken (13) durchgeführt wird.

9. Vorrichtung zur Durchführung des Verfahrens nach einem der Ansprüche 1 bis 8 für die mehrstufige Kalibrierung von mehrachsigen Messrobotern (6) und mitgeführten optischen Messeinrichtungen (10), insbesondere 3D-Sensoren, innerhalb einer Messstation (1) für Werkstücke (2), insbesondere für Fahrzeugrohkarosserien, wobei die Vorrichtung (47) eine Prüfeinrichtung (27) zur Kalibrierung des Arbeitspunktes (28) der optischen Messeinrichtung (10), einen Kalibrierkörper (15) zur Kalibrierung der Roboterachsen und eine Kalibriereinrichtung (12) für die Kalibrierung der Zuordnung des Messroboters (6) zum Werkstück (2) aufweist und wobei die Prüfeinrichtung (27) einen Halter (32) zur temporären Positionierung eines Referenzmusters (33) im Bereich des Arbeitspunkts (28) und eine Stelleinrichtung (35) zur ein- oder mehrachsigen Relativverstellung zwischen dem Referenzmuster (33) und der optischen Messeinrichtung (10) aufweist und wobei der Halter (32) eine lagegenaue Lagerung oder lösbare Befestigung (36) zur Verbindung mit einem Gestell (31) der optischen Messeinrichtung (10) besitzt.

10. Kalibriereinrichtung nach Anspruch 9, **dadurch gekennzeichnet, dass** die Stelleinrichtung (35) mindestens soviele Stellachsen (39,40,41) aufweist, wie die optische Messeinrichtung (10) Messachsen hat, wobei die Stellachsen (39,40,41) den Messachsen entsprechend ausgerichtet sind.

11. Kalibriereinrichtung nach Anspruch 9 oder 10, **dadurch gekennzeichnet, dass** der Halter (32) eine abgewinkelte Form hat, wobei die Stelleinrichtung (35) ein oder mehrere den Stellachsen (39,40,41) zugeordnete Stellschlitten (42) aufweist

12. Kalibriereinrichtung nach einem der Ansprüche 9 bis 11, **dadurch gekennzeichnet, dass** das Referenzmuster (33) als Bohrung in einer Musterplatte (34) ausgebildet ist

13. Kalibriereinrichtung nach einem der Ansprüche 9 bis 12, **dadurch gekennzeichnet, dass** die Musterplatte (34) als Stellschlitten (42) ausgebildet ist und eine Fixiereinrichtung (44) aufweist

14. Kalibriereinrichtung nach einem der Ansprüche 9 bis 13, **dadurch gekennzeichnet, dass** der Kalibrierkörper (15) in der Nähe des Messroboters (6) angeordnet ist und mindestens eine Messmarke (21) mit einer rotationssymmetrischen ebenen Kontur aufweist.

15. Kalibriereinrichtung nach einem der Ansprüche 9 bis 14, **dadurch gekennzeichnet, dass** die Messmarken (21) als kreisförmige Plättchen oder Öffnungen ausgebildet sind

16. Kalibriereinrichtung nach einem der Ansprüche 9 bis 15, **dadurch gekennzeichnet, dass** die Messmarken (21) an mehreren einzelnen stehenden und/oder liegenden Markenhaltern (22,23) am Kalibrierkörper (15) angeordnet sind und eine abwechselnd unterschiedliche Orientierung aufweisen.

17. Kalibriereinrichtung nach einem der Ansprüche 9 bis 16, **dadurch gekennzeichnet, dass** die Kalibriereinrichtung (12) ein oder mehrere Kalibriermarken (13) an ein oder mehreren ortsfesten mit bekannter Position nahe am Werkstück (2) angeordneten Markenträgern (14) und/oder an einem Werkstückträger (5) und/oder am Werkstück (2) aufweist.

18. Kalibriereinrichtung nach einem der Ansprüche 9 bis 17, **dadurch gekennzeichnet, dass** mehrere Kalibriermarken (13) in einer Gruppe mit definierter räumlicher Distanz zueinander angeordnet sind.

19. Kalibriereinrichtung nach einem der Ansprüche 9 bis 18, **dadurch gekennzeichnet, dass** die Kalibriermarken (13) eine ebene kreisrunde Kontur aufweisen und als Öffnungen, Blättchen oder Farbmarken ausgebildet sind.

20. Kalibriereinrichtung nach einem der Ansprüche 9 bis 19, **dadurch gekennzeichnet, dass** der Messroboter (6) und/oder das Werkstück (2) mit mindestens einer zusätzlichen Fahrachse (9), vorzugsweise auf mindestens einer Lineareinheit (8), beweglich angeordnet sind.

## Claims

1. Method of calibrating multi-axis measuring robots (6) and concomitantly guided optical measuring devices (10), especially 3D sensors, within a measuring station (1) for workpieces (2), especially for vehicle bodywork, **characterized in that** the calibration is carried out in a measurement sequence having at least three calibration steps which follow one another, in the first step the optical measuring device (10) with its operating point (28) being calibrated, after which the measuring robot (6) with its axes is calibrated with the aid of the concomitantly guided optical measuring device (10), the positioning error being compensated for while correcting the machine data of the measuring robot (6), and then the association between the measuring robot (6) and the workpiece (2) being calibrated with the aid of the concomitantly guided optical measuring device (10).

2. Method according to Claim 1, **characterized in that** the optical measuring device (10) with its operating point (28) is calibrated on the measuring robot (6) by means of a testing device (27) which can be positioned accurately and has a reference pattern (33), is positioned temporarily in the area of the operating point (28) and is brought into coincidence with the operating point (28) by means of a relative movement with respect to the optical measuring device (10), after which the reference pattern (33) is measured in order to determine the coordinates of the location of the operating point (28).

3. Method according to Claim 1 or 2, **characterized in that** in order to recalibrate the optical measuring device (10), the associated testing device (27) with the reference pattern (33) fixed in the intended position of the operating point (28) is brought into position and the coincidence of reference and actual position is checked, the optical measuring device (10) being readjusted or the reference pattern (33) being readjusted in order to correct any deviation and measured again in order to determine the coordinates of the location of the operating point (28).

4. Method according to Claim 1, 2 or 3, **characterized in that** the measuring robot (6) with its axes is calibrated on a calibration element (15) having at least one measuring mark (21) with a flat, rotationally symmetrical contour, the approach to the measuring mark (21) with the optical measuring device (10) being made from different directions and with different axis orientations of the measuring robot (6).

5. Method according to one of Claims 1 to 4, **characterized in that** in order to calibrate its association with the workpiece (2) by using the optical measuring device (10), the measuring robot (6) approaches and measures one or more calibration marks (13) on the workpiece (2) and/or on the workpiece carrier (5) and/or on at least one mark carrier (14) with a known position.

6. Method according to one of Claims 1 to 5, **characterized in that** a measurement coordinate system (17), in which the measurements are carried out, is laid over the calibration marks (13).

7. Method according to one of Claims 1 to 6, **characterized in that** during the calibration in the area of the calibration marks (13) and in the area of measurement points (11) on the workpiece, part operating spaces (18) are generated.

8. Method according to one of Claims 1 to 7, **characterized in that** the measuring robot (6) and/or the workpiece (2) are moved relative to each other during measurement in normal measuring operation, a calibration of the measuring robot (6) on the calibration marks (13) being carried out after the movement and before the next measurement.

9. Apparatus for carrying out the method according to one of Claims 1 to 8 for the multi-stage calibration of multi-axis measuring robots (6) and concomitantly guided optical measuring devices (10), especially 3D sensors, within a measuring station (1) for workpieces (2), especially for vehicle bodywork, the apparatus (47) having a testing device (27) for calibrating the operating point (28) of the optical measuring device (10), a calibration element (15) for calibrating the robot axes and a calibration device (12) for calibrating the association between the measuring robot (6) and the workpiece (2) and the testing device (27) having a holder (32) for the temporary positioning of a reference pattern (33) in the area of the operating point (28), and an actuating device (35) for the single-axis or multi-axis relative displacement between the reference pattern (33) and the optical measuring device (10), and the holder (32) having an accurately positioned mounting or releasable fastening (36) for connection to a frame (31) of the optical measuring device (10).

10. Calibration device according to Claim 9, **characterized in that** the actuating device (35) has at least as many actuating axes (39, 40, 41) as the optical measuring device (10) has measuring axes, the actuating axes (39, 40, 41) being oriented in accordance with the measuring axes.

11. Calibration device according to Claim 9 or 10, **characterized in that** the holder (32) has an angled shape, the actuating device (35) having one or more actuating slides (42) associated with the actuating axes (39, 40, 41).

12. Calibration device according to one of Claims 9 to 11, **characterized in that** the reference pattern (33) is formed as a hole in a pattern plate (34).

13. Calibration device according to one of Claims 9 to 12, **characterized in that** the pattern plate (34) is formed as actuating slides (42) and has a fixing device (44).

14. Calibration device according to one of Claims 9 to 13, **characterized in that** the calibration element (15) is arranged in the vicinity of the measuring robot (6) and has at least one measuring mark (21) with a rotationally symmetrical flat contour.

15. Calibration device according to one of Claims 9 to 14, **characterized in that** the measuring marks (21) are formed as circular platelets or openings.

16. Calibration device according to one of Claims 9 to 15, **characterized in that** the measuring marks (21) are arranged on a plurality of individual upright and/or horizontal mark holders (22, 23) on the calibration element (15) and have an alternately different orientation.

17. Calibration device according to one of Claims 9 to 16, **characterized in that** the calibration device (12) has one or more calibration marks (13) on one or more stationary mark carriers (14) arranged with a known position close to the workpiece (2), and/or on a workpiece carrier (5) and/or on the workpiece (2).

18. Calibration device according to one of Claims 9 to 17, **characterized in that** a plurality of calibration marks (13) are arranged in a group at a defined physical distance from one another.

19. Calibration device according to one of Claims 9 to 18, **characterized in that** the calibration marks (13) have a flat circular contour and are formed as openings, small leaves or coloured marks.

20. Calibration device according to one of Claims 9 to 19, **characterized in that** the measuring robot (6) and/or the workpiece (2) are arranged to be moveable with at least one additional movement axis (9), preferably on at least one linear unit (8).

## Revendications

1. Procédé d'étalonnage de robots (6) de mesure à plusieurs axes, et de dispositifs (10) optiques de mesure entraînés avec eux, notamment de capteurs 3D, dans un poste (1) de mesure de pièces (2), notamment de coques de véhicules automobiles, **caractérisé en ce que** l'on effectue l'étalonnage suivant une cascade de mesures, comprenant au moins trois stades successifs d'étalonnage, en étalonnant dans le premier stade le dispositif (10) optique de mesure par son point (28) de travail, en étalonnant ensuite le robot (6) de mesure par son axe à l'aide du dispositif (10) optique de mesure entraîné avec lui, l'erreur de mise en position étant compensée en corrigeant les données de machine du robot (6) de mesure et ensuite en étalonnant l'association du robot (6) de mesure à la pièce (2) à l'aide du dispositif (10) optique de mesure entraîné.

2. Procédé suivant la revendication 1, **caractérisé en ce que** l'on étalonne le dispositif (10) optique de mesure par son point (28) de travail sur le robot (6) de mesure au moyen d'un dispositif (27) de contrôle qui peut être mis en position de façon précise avec un modèle (33) de référence qui est mis temporairement en position dans la zone du point (28) de travail et qui, par un mouvement relatif par rapport au dispositif (10) optique de mesure, est mis en coïncidence avec le point (28) de travail, le modèle de référence étant mesuré ensuite pour déterminer les coordonnées dans l'espace du point (28) de travail.

3. Procédé suivant la revendication 1 ou 2, **caractérisé en ce que** pour réétalonner le dispositif optique de mesure, on met en position le dispositif (27) de contrôle associé ayant le modèle (33) de référence immobilisé en la position de consigne du point (28) de travail et l'on contrôle la coïncidence de la position de consigne et de la position réelle, en réglant, pour la correction d'écarts éventuels, le dispositif (10) optique de mesure ou le modèle (33) de référence et en remesurant pour déterminer les coordonnées dans l'espace du point (28) de travail.

4. Procédé suivant la revendication 1, 2 ou 3, **caractérisé en ce que** l'on étalonne le robot (6) de mesure avec son axe sur un corps (15) d'étalonnage par au moins un repère (21) de mesure ayant un contour plan de révolution, le repère (21) de mesure étant approché avec le dispositif (10) optique de mesure à partir de directions différentes et avec des orientations différentes de l'axe du robot (6) de mesure.

5. Procédé suivant l'une des revendications 1 à 4, **caractérisé en ce que** le robot (6) de mesure s'approche et mesure pour l'étalonnage de son association à la pièce (2) par le dispositif (10) optique de mesure, un ou plusieurs repères (13) d'étalonnage sur la pièce (2) et/ou sur le porte-pièce (5) et/ou sur au moins un porte-repère (14) de position connu.

6. Procédé suivant l'une des revendications 1 à 5, **caractérisé en ce qu'**il est appliqué aux repères d'étalonnage un système (17) de coordonnées de mesure dans lequel s'effectuent les mesures.

7. Procédé suivant l'une des revendications 1 à 6, **caractérisé en ce que** lors de l'étalonnage, on génère, dans la zone des repères (13) d'étalonnage et dans la zone de points (11) de mesure, sur la pièce, des sous-espaces (18) de travail.

8. Procédé suivant l'une des revendications 1 à 7, **caractérisé en ce que** le robot (6) de mesure et/ou la pièce (2) sont déplacés l'un par rapport à l'autre lors de la mesure en fonctionnement de mesure normal, un étalonnage du robot (6) de mesure sur les repères (13) d'étalonnage étant effectué après le mouvement et avant la mesure suivante.

9. Dispositif pour la mise en oeuvre du procédé suivant l'une des revendications 1 à 8, pour l'étalonnage en plusieurs stades de robots (6) de mesure à plusieurs axes et de dispositifs (10) optiques de mesure entraînés par ceux-ci, notamment de capteurs 3D, dans un poste (1) de mesure de pièce (2), notamment de coques de véhicules automobiles, le dispositif (47) comprenant un dispositif (27) de contrôle pour l'étalonnage du point (28) de travail du dispositif (10) optique de mesure, un corps (15) d'étalonnage pour l'étalonnage des axes du robot et un dispositif (12) d'étalonnage pour l'étalonnage de l'association du robot (6) de mesure à la pièce (2) et le dispositif (27) de contrôle comprenant une fixation (32) pour mettre temporaire en position un modèle (33) de référence dans la zone du point (28) de travail et un dispositif (35) de réglage pour le déplacement relatif sur un axe ou sur plusieurs axes entre le modèle (33) de référence et les dispositifs (10) optiques de mesure et la fixation (32) ayant une assise précise en position ou une fixation (36) amovible pour la liaison avec un bâti (31) du dispositif (10) optique de mesure.

10. Dispositif d'étalonnage suivant la revendication 9, **caractérisé en ce que** le dispositif (35) de réglage a au moins autant d'axes (39, 40, 41) de réglage que le dispositif (10) optique de mesure a d'axes de mesure, les axes (39, 40, 41) de réglage étant dirigés de manière à correspondre aux axes de mesure.

11. Dispositif suivant la revendication 9 ou 10, **caractérisé en ce que** la fixation (32) a une forme coudée, le dispositif (35) de réglage ayant un ou plusieurs chariots (42) de réglage associés aux axes (39, 40, 41) de réglage.

12. Dispositif suivant l'une des revendications 9 à 11, **caractérisé en ce que** le modèle (33) de référence est constitué sous la forme d'un trou dans une plaque (34) de modèle.

13. Dispositif suivant l'une des revendications 9 à 12, **caractérisé en ce que** la plaque (34) de modèle est constituée en chariot (42) de réglage et a un dispositif (44) d'immobilisation.

14. Dispositif suivant l'une des revendications 9 à 13, **caractérisé en ce que** le corps (15) d'étalonnage est disposé à proximité du robot (6) de mesure et a au moins un repère (21) de mesure ayant un contour plan de révolution.

15. Dispositif suivant l'une des revendications 9 à 14, **caractérisé en ce que** les repères (21) de mesure sont constitués sous la forme de plaquettes circulaires ou d'ouvertures.

16. Dispositif suivant l'une des revendications 9 à 15, **caractérisé en ce que** les repères (21) de mesure sont disposés sur plusieurs fixations (22, 23) de repère vertical et/ou horizontal sur le corps (15) d'étalonnage et ont une orientation différente qui alterne.

17. Dispositif suivant l'une des revendications 9 à 16, **caractérisé en ce que** le dispositif (12) d'étalonnage a un ou plusieurs repères (13) d'étalonnage sur un ou plusieurs porte-repères (14) disposés à poste fixe en une position connue à proximité de la pièce (2) et/ou sur un porte-pièce (5) et/ou sur la pièce (2).

18. Dispositif suivant l'une des revendications 9 à 17, **caractérisé en ce que** plusieurs repères (13) d'étalonnage sont disposés en un groupe ayant une distance entre eux dans l'espace, qui est définie.

19. Dispositif suivant l'une des revendications 9 à 18, **caractérisé en ce que** les repères (13) d'étalonnage ont un contour circulaire et sont constitués sous la forme d'ouvertures de lamelles ou de repères colorés.

20. Dispositif suivant l'une des revendications 9 à 19, **caractérisé en ce que** le robot (6) de mesure et/ou la pièce (2) sont montés mobiles en ayant au moins un axe (9) supplémentaire de déplacement, de préférence sur au moins une unité (8) linéaire.
